# EUROPÄISCHE PATENTSCHRIFT

(11) **EP 3 045 091 B1**
(45) Veröffentlichungstag und Bekanntmachung des Hinweises auf die Patenterteilung: **17.07.2019**
(21) Anmeldenummer: 15188159.6
(22) Anmeldetag: 02.10.2015
(51) Int. Cl.: A47J 31/44, A47J 31/46

(54) **GETRÄNKEZUBEREITUNGSVORRICHTUNG SOWIE BETRIEBSVERFAHREN**
BEVERAGE PREPARATION DEVICE AND METHOD OF OPERATION
DISPOSITIF DE PRÉPARATION DE BOISSONS ET PROCÉDÉ DE FONCTIONNEMENT

(30) Priorität: 14.01.2015 DE 102015100488
(43) Veröffentlichungstag der Anmeldung: 20.07.2016
(73) Patentinhaber: Eugster/Frismag AG, 8580 Amriswil (CH)
(72) Erfinder: Birke, Lars, 8274 Tägerwilen (CH)
(74) Vertreter: Patentanwälte Behrmann Wagner PartG mbB

(56) Entgegenhaltungen:
- EP-A1- 1 911 382
- EP-A1- 2 272 408
- EP-A1- 2 695 559
- EP-A1- 2 798 989
- EP-A1- 2 807 964
- DE-B3-102007 048 556
- DE-C1- 19 502 688
- DE-U1-202008 016 400

## Beschreibung

Die Erfindung betrifft eine Getränkezubereitungsvorrichtung, insbesondere eine Kaffeemaschine, gemäß dem Oberbegriff des Anspruchs 1, mit einer Heizeinrichtung zur Dampferzeugung, mit einer fluidleitend mit der Heizeinrichtung verbundenen Düseneinrichtung zum Erwärmen und/oder Aufschäumen von Milch mittels Dampf, wobei mit der Düseneinrichtung bei Dampfbeaufschlagung ein Unterdruck erzeugbar ist, mit welchem über eine fluidleitend mit der Düseneinrichtung verbundene und über eine Spülleitung mit einem Spülmedium beaufschlagbare Ansaugleitung Milch ansaugbar ist, und wobei zwischen einem Ansaugende der Ansaugleitung und der Düseneinrichtung eine einen verstellbaren Ventilkörper aufweisende Ventileinrichtung angeordnet ist, die in einer Schließstellung ein Strömen von Spülmedium aus der Spülleitung zum Ansaugende der Ansaugleitung verhindernd ausgebildet ist, wobei die Ventileinrichtung als druckabhängig selbsttätig schaltendes Rückschlagventil mit einem Ventilkörper ausgebildet ist, der bei Beaufschlagung der Ansaugleitung mit Spülmedium über die Spülleitung zum Schließen des Rückschlagventils selbsttätig dichtend mit einem Ventilsitz zusammenwirkt. Ferner betrifft die Erfindung ein Betriebsverfahren zum Betreiben einer Getränkezubereitungsvorrichtung gemäß dem Oberbegriff des Anspruchs 14.

Bei Getränkezubereitungsvorrichtungen, insbesondere Kaffeemaschinen, mit einer Einrichtung zum Erwärmen und/oder Aufschäumen von Milch müssen die mit Milch in Berührung kommenden Komponenten nach dem Bezug eines Getränks mit Milchanteil periodisch gespült werden, um ein Eintrocknen der Milch zu verhindern.

Spülvorgänge werden dabei zumeist mit Wasser aus einem Wassertank der Getränkezubereitungsvorrichtung oder von einem Frischwasseranschluss durchgeführt, wobei anschließend die Leitungen üblicherweise mit Dampf leergedrückt werden, damit bei einem nächsten Getränkebezug kein Wasser aus den Leitungen das Getränk verfälscht bzw. verwässert.

Reinigungsvorgänge werden üblicherweise mit einem speziellen Milchreiniger durchgeführt, welcher dazu geeignet ist, Milchanhaftungen zuverlässig zu lösen. Dazu wird der Milchreiniger üblicherweise in ein eignes Gefäß gegeben und bei Bedarf mit Wasser verdünnt. Die flüssige Lösung wird dann durch das Milchsystem geführt um alle Teile von Milchanhaftungen zu reinigen. Der Milchbehälter ist dabei von einer Ansaugleitung für Milch abgekoppelt, wodurch auch der einen Bestandteil der Ansaugleitung bildende Milchschlauch gereinigt werden kann, der während des normalen Betriebs in den Milchbehälter hineinragt und nach einem Milchbezug lediglich schwerkraftunterstützt leerläuft. Die im Schlauch befindliche Milch läuft dann zurück in den Milchbehälter.

Um Benutzerfehler auszuschließen, ist es vorteilhaft, Spülvorgänge der Ansaugleitung, insbesondere nach einem einstellbaren Zeitintervall wenn Spülvorgänge automatisch von der Getränkezubereitungsvorrichtung bzw. von deren Logik ausgelöst werden. Problematisch dabei ist, dass im normalen Betrieb der Milchbehälter über den Milchschlauch direkt mit der Düseneinrichtung zum Erwärmen und/oder Aufschäumen der Milch verbunden ist. Wird ein automatischer Spülvorgang von der Maschine ausgelöst und hierzu der Ansaugleitung über eine Spülleitung ein Spülmedium zugeführt, besteht die Gefahr, dass Spülmedium über das meist von einem Milchschlauch gebildete Ansaugende der Ansaugleitung in den Milchbehälter gelangt.

Um vorstehendes Problem zuverlässig zu verhindern, wird in der EP 2 196 118 B1 der Anmelderin in der Ansaugleitung eine über ein elektrisches Stellglied in Form eines Schrittmotors verfügende Ventileinrichtung vorgeschlagen, mit welcher bei einer entsprechenden Aktuierung mittels des Stellgliedes der Weg in Richtung Milchbehälter durch eine lineare oder translatorische Bewegung versperrt werden kann, so dass bei einem automatischen Spülvorgang kein Spülmedium über das Ansaugende der Ansaugleitung in den Milchbehälter gelangt.

Einfache und somit kostengünstigere Getränkezubereitungsvorrichtungen verfügen nicht über eine solche aufwendige, mit einem elektrischen Stellglied zu aktuierende Ventileinrichtung. Gleichermaßen wäre es jedoch wünschenswert, wenn auch solche Getränkezubereitungsvorrichtungen, insbesondere automatisch, d.h. selbsttätig mit Spülmedium spülbar wären ohne dass die Gefahr besteht, dass Spülmedium bis zum Ansaugende der Milchleitung und damit in das Milchbehältnis gelangt.

Aus der DE 10 2012 214 104 A1 ist ein Kaffeevollautomat bekannt, bei welchem eine Spülleitung, über welche alternativ auch Luft zuführbar ist, in eine Ansaugleitung mündet, über welche Milch in Richtung einer Düseneinrichtung ansaugbar ist. Wird über die Spülleitung Spülmedium zugeführt, so kann dies über eine in dem Dokument mit 23 bezeichnete Drossel ungehindert zum Milchbehälter strömen.

Aus der EP 2 272 408 A1 ist eine Getränkezubereitungsvorrichtung, bei der ein Rückschlagventil ein Strömen von Spülmedium in Richtung eines Ansaugens einer Ankoppeleinrichtung für einen Milchschlauch verhindert. Bei angeschlossenem Milchschlauch ist das Rückschlagventil blockiert. Das Rückschlagventil umfasst einen als Ventilkolben ausgebildeten Ventilkörper der entgegen einer Rückstellfeder durch Ankoppeln des Milchschlauchs verstellbar und blockierbar ist.

Aus der DE 10 2007 048 556 B3 ist aus einem fachfremden technischen Gebiet eine Geschirrspülmaschine mit Ventilklappe bekannt.

Zum weiteren Stand der Technik werden die EP 2 807 964 A1, die EP 2 695 559 A1, die DE 20 2008 016 401 U1, die EP 2 798 989 A1, die fachfremde DE 195 02 688 C1 sowie die EP 1 911 382 A1 genannt.

Der Erfindung liegt daher die Aufgabe zugrunde eine Getränkezubereitungsvorrichtung anzugeben, bei der in konstruktiv einfacher und kostengünstiger Weise verhindert wird, dass ungewollt, insbesondere automatisch in die Ansaugleitung gefördertes Spülmedium zu dem von der Düseneinrichtung abgewandten bzw. milchbehälterseitigen Ansaugende der Ansaugleitung für Milch und damit in einen dort vorgesehenen Milchbehälter gelangt. Ferner besteht die Aufgabe darin ein optimiertes Betriebsverfahren für eine solche Getränkezubereitungsvorrichtung, insbesondere eine Kaffeemaschine mit Milchfunktionalität anzugeben.

Diese Aufgabe wird hinsichtlich der Getränkezubereitungsvorrichtung mit den Merkmalen des Anspruchs 1 gelöst.

Hinsichtlich des Verfahrens wird die Aufgabe mit den Merkmalen des Anspruchs 14 gelöst, d.h. dadurch, dass, insbesondere automatisch initiiert, über die Spülleitung Spülmedium, insbesondere Heißwasser und/oder Kaltwasser und/oder Dampf, in die Ansaugleitung gefördert wird und dadurch die Ventilklappe des Rückschlagventils in eine Schließrichtung druckbeaufschlagt wird, wodurch die Ventilklappe des Rückschlagventils selbsttätig dichtend mit dem Ventilsitz zusammenwirkt und ein Strömen des Spülmediums in der Ansaugleitung bis zum Ansaugende verhindert.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, die Ventileinrichtung, mit der ein Einströmen von Spülmedium in einen ansaugseitigen Endabschnitt der Ansaugleitung und damit in einen dort vorgesehenen Milchbehälter verhindert wird, als druckabhängig selbsttätig schaltendes Rückschlagventil auszubilden, wobei das Rückschlagventil eine relativ zu einem Ventilsitz verschwenkbare Ventilklappe als Ventilkörper aufweist, die bei Beaufschlagung der Ansaugleitung mit Spülmedium über die Spülleitung zum Schließen des Rückschlagventils selbsttätig dichtend mit dem Ventilsitz zusammenwirkt bzw. zusammenwirkend angeordnet ist. Ein solches Rückschlagventil mit einer verschwenkbar angeordneten und bei Druckbeaufschlagung selbsttätig verstellbaren bzw. verschwenkbaren Ventilklappe ist konstruktiv vergleichsweise einfach realisierbar und zudem kostengünstig. Hierdurch wird es erstmals ermöglicht, auch einfachere bzw. kostengünstigere Getränkezubereitungsvorrichtungen mit Milcherwärmungs- und/oder Aufschäumfunktionalität, insbesondere entsprechend ausgebildete Kaffeemaschinen, wie Portionseinheiten-, insbesondere Kapselmaschinen oder Kaffeevollautomaten mit einer derartigen Funktionalität auszustatten, wobei die Getränkezubereitungsvorrichtung dann derart ausgebildet werden kann, dass mit dieser auch automatisiert initiierte Spülvorgänge, d.h. nicht unmittelbar von einem Benutzer ausgelöste Spülvorgänge, insbesondere nach einem vorgegebenen oder einstellbaren Zeit- und/oder Bezugsintervall ausgelöst werden können, also während des normalen Betriebs, auch wenn das Ansaugende der Ansaugleitung, insbesondere ein Milchschlauch noch an einen Milchbehälter angekoppelt bzw. in diesen hinein geführt ist. Bei Druckbeaufschlagung der Ventilklappe durch Einleiten von Spülmedium, insbesondere Warmwasser und/oder Kaltwasser und/oder Dampf in die Ansaugleitung über die Spülleitung wird von der verschwenkbar angeordneten Ventilklappe selbsttätig der Weg in einer von der Düseneinrichtung zum Aufwärmen und/oder Aufschäumen der Milch abgewandten Richtung hin zum Ansaugende versperrt, ohne dass es hierfür einer Aktuatorik zum Verstellen des Ventilkörpers bedarf.

Dabei liegt der speziellen Ausbildung des Rückschlagventils mit einer verschwenkbar angeordneten Ventilklappe eine weitere Überlegung bzw. Erkenntnis zugrunde, die bei bisherigen bekannten und aufwendigen Ausführungsvarianten mit Stellmotor keine Rolle gespielt hat. So ist der Saugdruck, der zum Ansaugen von Milch über die Ansaugleitung mittels der Düseneinrichtung durch Fördern von Dampf durch eine Venturidüse der Düseneinrichtung erzeugt wird vergleichsweise gering, so dass für eine selbsttätige Verstellung des Ventilkörpers des Rückschlagventils sichergestellt werden muss, dass dieser bei einem Ansaug-, d.h. Milcherwärmungs- und/oder Aufschäumvorgang sicher öffnet, um den Weg für Milch von dem Ansaugende der Ansaugleitung über das Rückschlagventil und die restliche Ansaugleitung zur Düseneinrichtung freizuschalten. Durch die spezielle Ausbildung des Ventilkörpers als selbsttätig verschwenkbar angeordnete Ventilklappe wird diese Forderung erfüllt, da die notwendigen Bewegungs- bzw. Öffnungskräfte einer solchen verschwenkbar angeordneten Ventilklappe sehr gering sind. Ein weiterer Vorteil einer verschwenkbar angeordneten Ventilklappe als Ventilkörper besteht in der guten bzw. automatisierbaren Reinigbarkeit. Dabei ist die Ventilklappe bevorzugt einenends gelenkig angeordnet und/oder ausgebildet (insbesondere biegbar), bevorzugt handelt es sich dabei um ein gehäusefestes Ende, während das der gelenkigen Ausbildung bzw. Anordnung gegenüberliegende Ende bevorzugt als freies Ende ausgebildet ist. Eine solche Ventilklappe ist mit besonders wenig Kraftaufwand verschwenkbar und kann bei geöffnetem Rückschlagventil seitlich umströmt werden.

Im Ergebnis wird also eine einfach aufgebaute Getränkezubereitungsvorrichtung mit einer Rückströmstoppfunktionalität für Spülmedium erhalten, die einfach aufgebaut und damit kostengünstig herstellbar ist und zudem ohne separate Aktuatorik durch den mittels der Druckeinrichtung erzeugten Unterdruck sicher öffenbar und gut reinigbar ist.

Unabhängig von der konkreten Ausbildung und Anordnung des den Ventilsitz aufweisenden bzw. tragenden Stellelementes ist es bevorzugt, wenn die Ansaugleitung, d.h. ein Kanalabschnitt durch dieses Stellelement hindurchgeführt ist, das Stellelement einen Durchgangskanal für Milch aufweist.

In Weiterbildung der Erfindung ist mit Vorteil vorgesehen, dass die Getränkezubereitungsvorrichtung Logikmittel aufweist, die automatisiert, insbesondere zu festgelegten oder einstellbaren Zeitpunkten und/oder nach einem festgelegten oder einstellbaren Getränkebezugsintervall bzw. Getränkebezugsanzahl einen Spülvorgang initiierend ausgebildet sind, bei welchem über die Spülleitung Spülmedium in die Ansaugleitung gefördert wird und das Rückschlagventil selbsttätig entgegen einer Ansaugrichtung für Milch schließt. Hierzu steuern die Logikmittel nach einer vorgegebenen oder einstellbaren Regel automatisch entsprechende Mittel zum Bereitstellen bzw. Fördern von Spülmedium, im Falle von Kalt- oder Heißwasser eine Pumpe und im Falle vom Dampf ggf. zusätzlich die Heizeinrichtung entsprechend an, um die Ansaugleitung über die Spülleitung in Richtung Düseneinrichtung automatisiert zu spülen, wobei ggf. von den Logikmitteln entsprechende Spülmediumfluidwege durch Ansteuerung entsprechender Ventilmittel geöffnet werden. Das Rückschlagventil schließt jedoch erfindungsgemäß selbsttätig ohne elektromotorischen Verstellantrieb. Auf diese Weise wird auch bei einfach aufgebauter Getränkezubereitungsvorrichtung eine, insbesondere regelmäßige Spülung der Ansaugleitung mit Spülmedium ermöglicht, auch wenn diese über das Ansaugleitungsende noch mit einem Milchbehälter verbunden ist.

Um eine Verschwenkung der Ventilklappe zwischen Ihrer Schließposition und einer Öffnungsposition optimiert und vorzugsweise mit geringer Betätigungskraft zu ermöglichen, ist in Weiterbildung der Erfindung vorgesehen, dass die Ventilklappe an einem stationären Bauteil der Getränkezubereitungsvorrichtung, insbesondere an einem Rückschlagventilgehäuse verschwenkbar festgelegt ist, insbesondere Biegegelenkmittel, welche wie später noch erläutert werden wird, in einer ganz besonders bevorzugten Ausführungsform unmittelbar von der dann als Elastomerteil ausgebildeten Rückschlagklappe (Ventilklappe) gebildet sind.

Ganz besonders bevorzugt ist eine Ausführungsform, bei der der Ventilklappe keine von der Ventilklappe separaten Rückstellfedermittel zugeordnet sind - falls etwaige Rückstellkräfte bereitgestellt werden sollen, werden diese bevorzugt aus der Formgebung und/oder der Materialwahl der Ventilklappe von dieser selbst erzeugt. Bevorzugt ist das Rückschlagventil in der Art eines Flatterventils ausgebildet.

Besonders zweckmäßig ist es nun, die Ventilklappe elastisch verformbar auszubilden, so dass die Verschwenkbewegung der Ventilklappe als Biegebewegung und damit Verformbewegung der Ventilklappe realisiert ist. Bevorzugt ist die Ventilklappe hierzu, vorzugsweise vollständig, aus Elastomermaterial, d.h. als Elastomerteil ausgebildet, beispielsweise aus Silikon. Ganz besonders bevorzugt ist es dabei, wenn das Elastomerteil plättchenförmig, also als Elastomerplättchen ausgeformt ist. Besonders zweckmäßig ist die Klappe hierzu als elastische Membran ausgebildet.

Zur Fixierung der Ventilklappe hat es sich als vorteilhaft herausgestellt, wenn diese mit einem Klemmabschnitt verbunden ist, mit dem die Ventilklappe zwischen zwei stationären Bauteilen der Getränkezubereitungsvorrichtung, insbesondere zwei Rückschlagventilgehäusen, klemmend festgelegt ist. Dabei ist eine Ausführungsform von besonderem Vorteil, bei der der vorerwähnte Klemmabschnitt und die Ventilklappe als einstückiges Bauteil, insbesondere Elastomerteil ausgebildet sind. Gemäß einer ganz besonders bevorzugten Ausführungsvariante ist der Klemmabschnitt als Ringabschnitt bzw. Dichtabschnitt ausgebildet, der die Verbindung aus den zwei stationären Bauteilen, insbesondere den Rückschlagventilgehäuseteilen abdichtet, wobei von den Bauteilen bevorzugt ein die Ventilklappe aufnehmender Ventilraum begrenzt ist. Anders ausgedrückt kommt dem Klemmabschnitt bevorzugt eine Doppelfunktion zu - einerseits sorgt er für eine insbesondere gehäusefeste Fixierung der Ventilklappe und darüber hinaus dient er als Dichtung zur Abdichtung des Ventilgehäuses nach außen. Ganz besonders bevorzugt ist der vorerwähnte Ring- bzw. Dichtabschnitt ausschließlich über einen Biegeabschnitt mit der eigentlichen Ventilklappe verbunden - in Umfangsrichtung benachbart zu diesem Biegeabschnitt ist der Ringabschnitt bevorzugt in radialer Richtung zur Ventilklappe beabstandet angeordnet, um somit ausreichend Raum für eine Umströmung der Ventilklappe bei geöffnetem Rückschlagventil bereitzustellen.

Konstruktiv von besonderem Vorteil ist eine Ausführungsform, bei der das Rückschlagventil als Modul ausgebildet ist, welches, insbesondere lösbar, jedenfalls dichtend mit der restlichen Getränkezubereitungsvorrichtung durch Festlegung an einer Modulaufnahme verbunden bzw. verbindbar ist. Das Rückschlagventil umfasst zwei miteinander, bevorzugt lösbar verbundene, beispielsweise verrastbare Gehäuseteile, die noch weiter bevorzugt zwischen sich als Dichtung den vorerwähnten Klemmabschnitt aufnehmen. Jedenfalls begrenzen die miteinander verbundenen Gehäuseteile (insbesondere Gehäuseschalen) einen Ventilraum mit darin angeordneter Ventilklappe.

Im Hinblick auf die Anordnung der Spülleitung relativ zur Ansaugleitung ist es bevorzugt, wenn die Spülleitung in einem Bereich zwischen dem Rückschlagventil und der Düseneinrichtung in die Ansaugleitung mündet, wobei es noch weiter bevorzugt ist, wenn die Spülleitung hierzu zu dem Rückschlagventil bzw. der Ventilklappe beabstandet angeordnet ist.

Die Spülleitung ist derart mit weiteren Komponenten der Getränkezubereitungsvorrichtung verbunden, dass das entsprechende i Spülmedium, insbesondere automatisch initiiert bereitgestellt bzw. über die Spülleitung zuführbar ist. Für den Fall von Heißwasser als Spülmedium ist die Spülleitung bevorzugt mit dem Ausgang mindestens einer Heizeinrichtung verbunden und/oder über entsprechende Ventilmittel verbindbar, ebenso, wenn als Spülmedium Dampf eingesetzt wird, wobei dieser vorzugsweise in einem zweiten Spülschritt bereitgestellt wird, um noch in der Ansaugleitung vorhandenes kaltes oder erwärmtes Spülwasser herauszudrücken. In sämtlichen Fällen ist der Spülleitung bevorzugt eine Pumpe zugeordnet, mit der Wasser entweder über die Heizeinrichtung oder unter Umgehung dieser zur Spülleitung förderbar ist.

Besonders zweckmäßig ist eine Ausführungsform, bei der der Spülleitung nicht nur die vorerwähnte Spülfunktion zukommt, sondern bei der die Spülleitung in Abhängigkeit der Ventilstellung von Ventilmitteln in einem entsprechenden Betriebszustand der Getränkezubereitungsvorrichtung die Funktion einer Luftleitung übernimmt, über welche Luft, insbesondere mittels des mit der Düseneinrichtung erzeugbaren Unterdrucks ansaugbar ist, um diese Luft mit der angesaugten Milch zu mischen und das Luft-Milchgemisch mittels der Düseneinrichtung aufzuschäumen. Hierzu sind die vorgenannten Ventilmittel mit entsprechenden Logikmitteln verbunden bzw. ansteuerbar.

Alternativ ist es möglich, dass zusätzlich zu der Spülleitung eine separat von der Spülleitung in die Ansaugleitung mündende Luftleitung vorgesehen ist und dann der Spülleitung bevorzugt keine Luftleitungsfunktion zukommt.

Besonders zweckmäßig ist eine Ausführungsform, bei der die Ansaugleitung in einem Bereich auf der von der Düseneinrichtung abgewandten Seite bzw. Ansaugseite des Rückschlagventils einen flexiblen, insbesondere lösbar fixierten Schlauch umfasst, wobei es noch weiter bevorzugt ist, wenn dieser Schlauch bis zum Ende der Ansaugleitung reicht bzw. das Ansaugende bildet.

Um insbesondere außerhalb eines automatisch initiierten Reinigungszyklus die Ansaugleitung bis zum Ansaugende spülen zu können, bevorzugt von einem zuvor geförderten, insbesondere angesaugten Reinigungsfluid befreien zu können, ist in Weiterbildung der Erfindung mit Vorteil vorgesehen, dass der Ventilsitz, mit welchem die Ventilklappe in der Schließstellung selbsttätig dichtend zusammenwirkt beweglich bzw. verstellbar angeordnet ist, und zwar zwischen einer Funktionsposition, in der die Ventilklappe in ihrer Schließstellung dichtend mit dem Ventilsitz zusammenwirkt und einer, bevorzugt in einer Strömungsrichtung von Fluid durch die Ansaugleitung von der Funktionsposition beabstandeten Parkposition, in der die Ventilklappe nicht zu dichtenden Anlage an dem Ventilsitz kommt, selbst wenn sie in Richtung Ansaugende, insbesondere mittels Spülmedium druckkraftbeaufschlagt wird. Wird der Ventilsitz in diese Parkposition verfahren, kann nunmehr die Ansaugleitung bis zum Ansaugende rückgespült bzw. freigespült werden. Grundsätzlich ist es denkbar, zum Verstellen des Ventilsitzes einen, insbesondere elektromotorischen Antrieb einzusetzen und/oder eine manuelle Verstellmechanik vorzusehen. Besonders bevorzugt ist es, wenn auf einen derartigen Antrieb verzichtet wird und im Sinne einer einfachen kostengünstigen Ausführung der Ventilsitz ausschließlich manuell zwischen den vorgenannten Positionen verstellbar ist.

Bevorzugt wird der Ventilsitz hierzu axial, d.h. entlang einer Geraden verstellt, insbesondere weiter in Richtung Ansaugende, d.h. weiter von der Ventilklappe weg. Denkbar ist es jedoch auch, den Ventilsitz zum Verstellen in die Parkposition in Richtung Ventilklappe zu verstellen, insbesondere derart, dass der Ventilsitz die Ventilklappe in der Ansaugrichtung der Milch auslenkt und somit derart positioniert bzw. kraftbeaufschlagt, dass die Ventilklappe bei Druckbeaufschlagung mit Spülmedium in Richtung Ansaugende nicht zur dichtenden Anlage an dem Ventilsitz gelangen kann.

Eine besonders bevorzugte Möglichkeit zur Realisierung einer Verstellmechanik des Ventilsitzes besteht darin, diesen, genauer das den Ventilsitz tragende Bauteil, insbesondere um seine Längsachse, rotierbar anzuordnen und dem Ventilsitz, genauer dem Ventilsitzbauteil Kulissenmittel zur Umwandlung einer Rotationsbewegung in eine Verstellbewegung relativ zu der Ventilklappe zum Verstellen des Ventilsitzes zwischen der Funktionsposition und der Parkposition zugeordnet sind. Anders ausgedrückt kann der Ventilsitz über eine Drehbewegung und eine Steuerkurve auf die Ventilklappe zu oder von dieser weg bewegt werden, insbesondere derart verstellt werden, dass das Rückschlagventil dann in seiner Parkposition in beide Richtungen durchlässig ist.

Vorgenannte Ausführungsform ist besonders vorteilhaft während einer Reinigung. Der Milchbehälter wird dann durch einen Behälter mit Reinigungsflüssigkeit ersetzt. In einer ersten Reinigungsphase wird die Reinigungsflüssigkeit angesaugt, insbesondere mittels des über die Düseneinrichtung erzeugten Unterdrucks, um somit Milchanhaftungen an den kontaminierten Teilen bzw. innerhalb der Ansaugleitung zu entfernen. Nach einer solchen Reinigungsphase müssen dann die mit der Reinigungsflüssigkeit in Berührung gekommenen Teile wieder gespült werden. Dies kann beispielsweise mit kaltem Wasser aus einem Wassertank oder von einem Festwasseranschluss oder mit Heißwasser erfolgen. Das Spülwasser tritt dabei zum Teil am Auslass der Düseneinrichtung aus und teilweise am Ansaugende der Ansaugleitung, insbesondere in einen Behälter, in dem sich zuvor die Reinigungsflüssigkeit befunden hat. Zusätzlich oder alternativ kann als Spülmedium Dampf "rückwärts" durch das Rückschlagventil gefördert werden, insbesondere um das von einem vorhergehenden Spülvorgang mit Spülwasser verbleibende Restwasser herauszudrücken.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine geschnittene Ansicht einer Milch-Erwärmungs- und Aufschäumeinrichtung/-anordnung einer Getränkezubereitungsvorrichtung, insbesondere einer Kaffeemaschine,
- Fig. 2:: in einer Explosionsdarstellung eine bevorzugte Ausführungsform des im Rahmen der Anordnung zum Einsatz kommenden Rückschlagventils,
- Fig. 3a und 3b:: eine alternative Ausführungsform eines Rückschlagventils mit in unterschiedliche Relativpositionen zu einer Ventilklappe verstelltem Ventilsitz.

In den Figuren sind gleiche Elemente und Elemente mit der gleichen Funktion mit den gleichen Bezugszeichen gekennzeichnet.

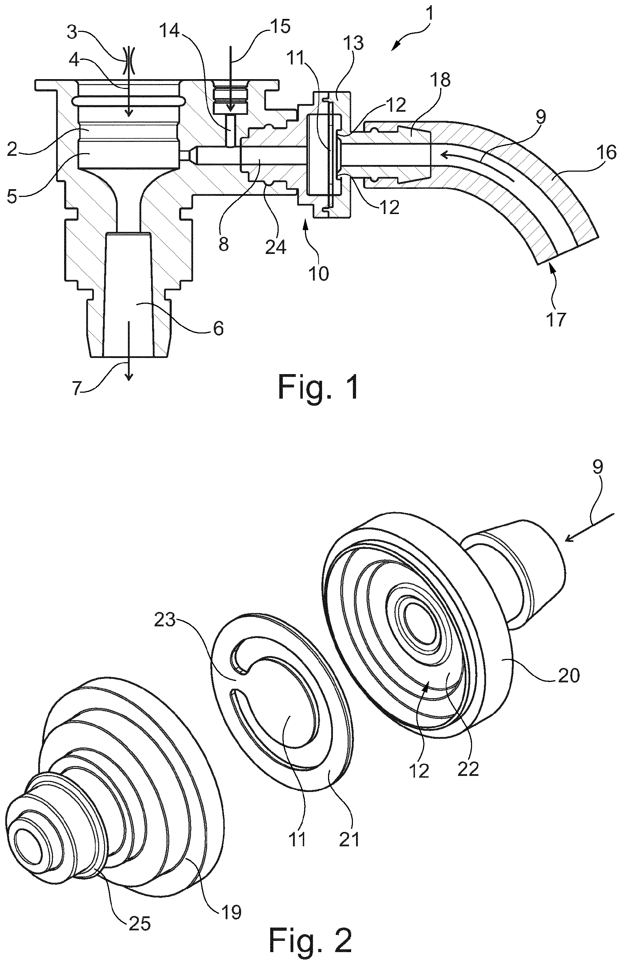

In Fig. 1 ist ein Ausschnitt einer Getränkezubereitungsvorrichtung 1 gezeigt, mit welcher Milch erwärmt und aufgeschäumt werden kann. Zusätzlich ist die Getränkezubereitungsvorrichtung zur Herstellung eines Kaffeegetränks ausgebildet, wobei die erwärmte Milch oder der Milchschaum dem Kaffeegetränk zur Herstellung unterschiedlicher Kaffeegetränkearte beifügbar ist.

Zu erkennen ist jedenfalls eine Düseneinrichtung 2, umfassend eine Venturidüse 3, die dampfleitend mit einer zum Erzeugen von Dampf ausgebildeten, nicht dargestellten Heizeinrichtung, insbesondere einem Durchlauferhitzer verbunden ist. Über die Venturidüse 3 strömt Dampf 4 in eine Mischkammer 5, hier eine Aufschäumkammer, in der Milch mit dem Dampf vermischt wird und die Milch, wenn dieser zuvor, wie später noch erläutert werden wird, Luft zugeführt wird bzw. wurde aufgeschäumt wird. Die erwärmte und/oder aufgeschäumte Milch 7 verlässt dann die Düseneinrichtung 2 über einen Auslass 6.

In die Mischkammer 5 mündet eine Ansaugleitung 8 für kalte Milch 9, über die Milch aus einem nicht dargestellten Behältnis ansaugbar ist, und zwar über den mittels der Venturidüse 3 bei Durchströmung mit Dampf 4 erzeugtem Unterdruck.

In die Ansaugleitung 8 ist ein druckabhängig selbstständig schaltendes Rückschlagventil 10 integriert, umfassend eine als Elastomermembran ausgebildete Ventilklappe 11, die in einer Schließstellung bei Beaufschlagung der Ventilklappe 11 entgegen einer Ansaugrichtung für kalte Milch dichtend mit einem Ventilsitz 12 zusammenwirkt. Die Ventilklappe 11 ist wie erwähnt, als Elastomermembran bzw. Elastomerplättchen ausgebildet und elastisch verbiegbar. Die Ventilklappe 11 ist gehäusefest an einem, hier zweiteiligen Rückschlagventilgehäuse 13 festgelegt. Wird Milch 9 über den vorerwähnten Unterdruck in einer Ansaugrichtung angesaugt, wirkt jedenfalls die Ventilklappe 11 nicht dichtend mit dem Ventilsitz 12 zusammen und Milch 9 kann in die Mischkammer 5 strömen.

In einem Bereich zwischen dem Rückschlagventil 10 bzw. der Ventilklappe 11 und der Mischkammer 9 mündet in die Ansaugleitung 8 eine Spülleitung 14, über welche Spülmedium 15, insbesondere Wasser und/oder Dampf in die Ansaugleitung 8 gefördert wird. Das Rückschlagventil 10 verhindert nun durch dichtendes Zusammenwirken mit der biegbaren Ventilklappe 11 in ihrer Schließstellung, dass Spülmedium durch das Rückschlagventil 10 bis zu einem, hier von einem flexiblen Schlauch 16 gebildeten Ansaugende 17 der Ansaugleitung 8 gelangt. Zu erkennen ist, dass der flexible Schlauch 16 lösbar an der Getränkezubereitungsvorrichtung 1 fixiert ist, genauer an einem Anschlussnippel 18 des Rückschlagventils 10 bzw. des Rückschlagventilgehäuses 13.

Die Spülleitung 15 hat bei der Ausführungsform gemäß Fig. 1 in einem Milchaufschäumbetriebszustand die Funktion einer Luftleitung, d.h. es kann Luft über die Spülleitung 15 angesaugt und der Milch 8 beigemischt werden, um somit in der Mischkammer 5 durch Beimischung von Dampf Milchschaum erzeugen zu können.

Das Rückschlagventil 10 ist modulartig aufgebaut und umfasst, wie in Fig. 2 gezeigt ist zwei aneinander fixierbare, insbesondere miteinander verrastbare Gehäuseteile 19, 20, die zwischen sich einen Klemmabschnitt 21 aufnehmen, mit welchem die Elastomer-Ventilklappe 11 gehäusefest anordenbar ist. Der Klemmabschnitt 21 dient gleichzeitig als Dichtung zur Abdichtung des Rückschlagventilgehäuses bzw. des von diesem umschlossenen Ventilraums 22 nach außen. Wie aus Fig. 2 zu erkennen ist, umschließt der Klemmabschnitt 21 die eigentliche Ventilklappe 11 mit Radialabstand und ist über Biegegelenkmittel 23 bzw. einen Biegeabschnitt mit der Ventilklappe 11 verbunden. Biegegelenkmittel (Biegeabschnitt) 23, Klemmabschnitt 21 und Ventilplättchen sind als einteiliges Elastomerbauteil bzw. Elastomerplättchen ausgebildet. Den Biegeabschnittmitteln 23 gegenüberliegend weist die Ventilklappe ein freies Ende auf.

Zur dichtenden, insbesondere lösbaren Verbindung des modulartigen Rückschlagventils 10 mit einer Modulaufnahme 24 (vgl. Fig. 1) ist eine als O-Ringdichtung ausgebildete Ringdichtung 25 vorgesehen, die gleichzeitig für eine gewisse reib- und formschlüssige Arretierung in der Modulaufnahme 24 Sorge trägt.

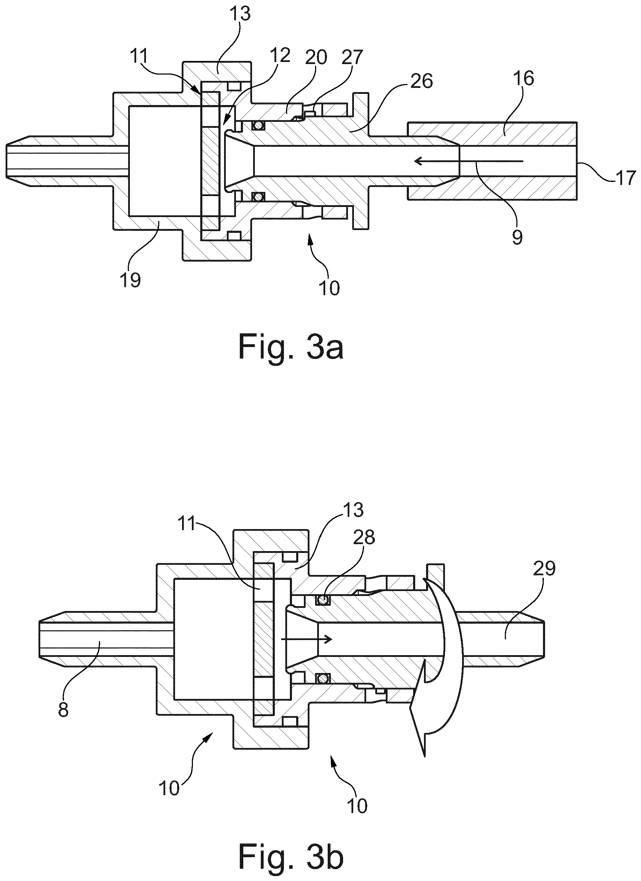

In den Fig. 3a und 3b ist ein ebenfalls modulartig aufgebautes, alternatives Rückschlagventil für die Integration in einer Getränkezubereitungsvorrichtung 1 gemäß Fig. 1 gezeigt. Der grundsätzliche Aufbau entspricht dem zuvor beschriebenen Aufbau. Zusätzlich hat das Rückschlagventil 10 gemäß den Fig. 3a und 3b eine Verstellfunktionalität zum Einstellen des Abstandes des Ventilsitzes 12 zur Ventilklappe 11. Aufgrund der ansonsten gleichen Funktionsweise wird im Folgenden im Wesentlichen auf die Unterschiede zu dem zuvor beschriebenen Ausführungsbeispiel eingegangen, um Wiederholungen zu vermeiden. Im Hinblick auf die Gemeinsamkeiten wird auf das vorstehende Ausführungsbeispiel verwiesen.

In dem Gehäuseteil 20 ist ein Stellelement 26 rotierbar angeordnet, an dem endseitig auf der der Ventilklappe 11 zugewandten Seite der Ventilsitz 12 ausgebildet ist. Über eine im Gehäusebauteil 20 ausgebildete Kulissenführung 27 wird die Rotationsbewegung des Stellelementes 26 in eine axiale Bewegung des Stellelementes 26 zusammen mit dem Ventilsitz 12 ausgebildet, so dass der Ventilsitz 12 zwischen der in Fig. 3a gezeigten Funktionsposition, in der die Ventilklappe 11 bei entsprechender Druckbeaufschlagung dichtend mit dem Ventilsitz 12 zusammenwirken kann und in der in Fig. 3 gezeigten Parkposition, in der ein derartiges dichtendes Zusammenwirken nicht möglich ist und folglich das Rückschlagventil 10 rückwärts, d.h. entgegen einer Ansaugrichtung durchströmbar ist, verstellbar ist.

Das Stellelement 26 ist über eine randseitige Ringdichtung 28 gegenüber dem Rückschlagventilgehäuse 13 abgedichtet und das Stellelement 26 weist in seinem Inneren einen Kanalabschnitt 29 als Teil der Ansaugleitung 8 auf.

In der Funktionsposition gemäß Fig. 3a kann automatisch initiiert die Ansaugleitung 8 gespült werden und die Ventilklappe 11 schließt selbsttätig bzw. wirkt selbsttätig mit dem Ventilsitz 12 zusammen, so dass kein Spülmedium in Richtung Ansaugende 17 strömen kann. Für einen manuellen Freispülschritt, bei dem auch das Ansaugende 17 mit Spülmedium beaufschlagt werden soll, kann dann der Ventilsitz 12, hier beispielhaft durch manuelles Verdrehen des Stellelementes 26 axial relativ zu der Ventilklappe 11 verstellt werden und der Strömungsweg entgegen der Ansaugrichtung ist offen.

Das Stellelement 26 stellt in bevorzugter Weise gleichzeitig einen Adapter zum Anschluss des flexiblen Schlauches 16 zum Ansaugen von Milch dar.

### Bezugszeichen

- 1: Getränkezubereitungsvorrichtung
- 2: Düseneinrichtung
- 3: Venturidüse
- 4: Dampf
- 5: Mischkammer
- 6: Auslass
- 7: erwärmte und/oder aufgeschäumte Milch
- 8: Ansaugleitung
- 9: kalte Milch
- 10: Rückschlagventil
- 11: Ventilklappe
- 12: Ventilsitz
- 13: Rückschlagventilgehäuse
- 14: Spülleitung
- 15: Spülmedium
- 16: flexibler Schlauch
- 17: Ansaugende der Ansaugleitung
- 18: Anschlussnippel
- 19: Gehäuseteil
- 20: Gehäuseteil
- 21: Klemmabschnitt
- 22: Ventilraum
- 23: Biegegelenkabschnitt
- 24: Modulaufnahme
- 25: Ringdichtung
- 26: Stellelement mit Ventilsitz
- 27: Kulissenmittel
- 28: Ringdichtung
- 29: Kanalabschnitt

## Patentansprüche

1. Getränkezubereitungsvorrichtung (1), insbesondere Kaffeemaschine, mit einer Heizeinrichtung zur Dampferzeugung, mit einer fluidleitend mit der Heizeinrichtung verbundenen Düseneinrichtung (2) zum Erwärmen und/oder Aufschäumen von Milch (7) mittels Dampf (4), wobei mit der Düseneinrichtung (2) bei Dampfbeaufschlagung ein Unterdruck erzeugbar ist, mit welchem über eine fluidleitend mit der Düseneinrichtung (2) verbundene und über eine Spülleitung (14) mit einem Spülmedium (15) beaufschlagbare Ansaugleitung (8) Milch (9) ansaugbar ist, und wobei zwischen einem Ansaugende (17) der Ansaugleitung (8) und der Düseneinrichtung (2) eine einen verstellbaren Ventilkörper aufweisende Ventileinrichtung angeordnet ist, die in einer Schließstellung ein Strömen von Spülmedium (15) aus der Spülleitung (14) zum Ansaugende (17) der Ansaugleitung (8) verhindert, **dadurch gekennzeichnet, dass** die Ventileinrichtung als druckabhängig selbsttätig schaltendes Rückschlagventil (10) mit einem Ventilkörper ausgebildet ist, der bei Beaufschlagung der Ansaugleitung (8) mit Spülmedium (15) über die Spülleitung (14) zum Schließen des Rückschlagventils (10) selbsttätig dichtend mit einem Ventilsitz (12) zusammenwirkt, wobei der Ventilkörper als relativ zu dem Ventilsitz (12) verschwenkbare Ventilklappe (11) ausgebildet ist.

2. Getränkezubereitungsvorrichtung nach Anspruch 1,
**gekennzeichnet durch**
Logikmittel, die automatisiert, insbesondere in einem festgelegten oder einstellbaren Zeitintervall und/oder nach einem festgelegten oder einstellbaren Getränkebezugsintervall, einen Spülvorgang initiierend ausgebildet sind, bei welchem über die Spülleitung (14) Spülmedium (15) in die Ansaugleitung (8) gefördert wird und das Rückschlagventil (10) selbsttätig schließt.

3. Getränkezubereitungsvorrichtung nach einem der Ansprüche 1 oder 2,
**dadurch gekennzeichnet,**
**dass** die Ventilklappe (11) an einem stationären Bauteil der Getränkezubereitungsvorrichtung (1), insbesondere an einem Rückschlagventilgehäuse (13), verschwenkbar festgelegt ist.

4. Getränkezubereitungsvorrichtung nach einem der vorhergehenden Ansprüche,
**dadurch gekennzeichnet,**
**dass** die, bevorzugt als, insbesondere plättchenförmiges, Elastomerteil ausgebildete, Ventilklappe (11) elastisch verformbar ausgebildet und durch Biegen zwischen einer Öffnungsstellung und der Schließstellung ist.

5. Getränkezubereitungsvorrichtung nach einem der vorhergehenden Ansprüche,
**dadurch gekennzeichnet,**
**dass** die Ventilklappe (11), bevorzugt einstückig, mit einem, bevorzugt ringförmigen, Klemmabschnitt (21) verbunden ist, mit dem die Ventilklappe (11) zwischen zwei stationären Bauteilen der Getränkezubereitungsvorrichtung (1), insbesondere zwei Rückschlagventilgehäusen (13), bevorzugt klemmend festgelegt ist.

6. Getränkezubereitungsvorrichtung nach einem der vorhergehenden Ansprüche,
**dadurch gekennzeichnet,**
**dass** das Rückschlagventil (10) zwei miteinander, bevorzugt lösbar verbundene, insbesondere verrastete Gehäuseteile (19, 20) aufweist, die einen Ventilraum (22) mit darin angeordneter Ventilklappe (11) begrenzen, welches dichtend, insbesondere lösbar, an einer Modulaufnahme (24) der Getränkezubereitungsvorrichtung (1) festgelegt ist.

7. Getränkezubereitungsvorrichtung nach einem der vorhergehenden Ansprüche,
**dadurch gekennzeichnet,**
**dass** die Spülleitung (14) in einem Bereich zwischen dem Rückschlagventil (10) und der Düseneinrichtung (2) in die Ansaugleitung (8), bevorzugt beabstandet zum Rückschlagventil (10), mündet.

8. Getränkezubereitungsvorrichtung nach einem der vorhergehenden Ansprüche,
**dadurch gekennzeichnet,**
**dass** der Ansaugleitung als Spülmedium (15) über die Spülleitung (14) Heißwasser und/oder Kaltwasser und/oder Dampf (4) zuführbar ist.

9. Getränkezubereitungsvorrichtung nach einem der vorhergehenden Ansprüche,
**dadurch gekennzeichnet,**
**dass** die Spülleitung (14) mit Ventilmitteln der Getränkezubereitungsvorrichtung (1) verbunden ist und dass in einer ersten Ventilstellung dieser Ventilmittel Spülmedium (15), insbesondere Heißwasser, Kaltwasser oder Dampf (4) über die Spülleitung (14) in die Ansaugleitung (8) förderbar ist und dass in einer zweiten Ventilstellung die Spülleitung (14) die Funktion einer Luftleitung aufweist, über die in einem Milchschaumbetriebszustand der Getränkezubereitungsvorrichtung (1) der Ansaugleitung (8) Luft zuführbar ist, bevorzugt durch Ansaugen mittels der Düseneinrichtung (2).

10. Getränkezubereitungsvorrichtung nach einem der Ansprüche 1 bis 8,
**dadurch gekennzeichnet,**
**dass** zusätzlich zu der Spülleitung (14) eine Luftleitung in die Ansaugleitung (8) mündet, über die in einem Milchschaumbetriebszustand der Getränkezubereitungsvorrichtung (1) der Ansaugleitung (8) Luft zuführbar ist, bevorzugt durch Ansaugen mittels der Düseneinrichtung (2).

11. Getränkezubereitungsvorrichtung nach einem der vorhergehenden Ansprüche,
**dadurch gekennzeichnet,**
**dass** die Ansaugleitung (8) zumindest abschnittsweise in einem Bereich zwischen dem Rückschlagventil (10) und dem Ansaugende (17) von einem flexiblen, insbesondere lösbar an der Getränkezubereitungsvorrichtung (1) festgelegten, Schlauch (16) gebildet ist.

12. Getränkezubereitungsvorrichtung nach einem der vorhergehenden Ansprüche,
**dadurch gekennzeichnet,**
**dass** der Ventilsitz (12), mit welchem die Ventilklappe (11) in der Schließstellung selbsttätig dichtend zusammenwirkt, zwischen einer Funktionsposition, in der die Ventilklappe (11) in ihrer Schließstellung dichtend mit dem Ventilsitz (12) zusammenwirkt und einer, bevorzugt entgegen einer Ansaugrichtung von Milch durch die Ansaugleitung (8) von der Funktionsposition beabstandeten, Parkposition, manuell und/oder über einen, bevorzugt elektromotorischen, Antrieb, verstellbar ist, in der die Ventilklappe (11) bei Druckbeaufschlagung mit Spülmedium (15) entgegen einer Ansaugrichtung der Milch nicht dichtend mit dem Ventilsitz (12) zusammenwirken kann, um eine Rückspülung der Ansaugleitung (8) bis zum Ansaugende (17) zu ermöglichen.

13. Getränkezubereitungsvorrichtung nach Anspruch 12,
**dadurch gekennzeichnet,**
**dass** der Ventilsitz (12), insbesondere um seine Längsachse, rotierbar angeordnet ist und dass dem Ventilsitz (12) Kulissenmittel (27) zur Umwandlung seiner Rotationsbewegung in eine, insbesondere translatorische Verstellbewegung relativ zu der Ventilklappe (11) zum Verstellen des Ventilsitzes (12) zwischen der Funktionsposition und der Parkposition zugeordnet sind.

14. Verfahren zum Betreiben einer Getränkezubereitungsvorrichtung (1), insbesondere Kaffeemaschine, nach einem der vorhergehenden Ansprüche,
**dadurch gekennzeichnet,**
**dass**, insbesondere automatisch initiiert, über die Spülleitung (14) Spülmedium (15), insbesondere Heißwasser und/oder Kaltwasser und/oder Dampf (4), in die Ansaugleitung (8) gefördert wird und dadurch die Ventilklappe (11) des Rückschlagventils (10) in eine Schließrichtung druckbeaufschlagt wird wodurch diese selbsttätig dichtend mit dem Ventilsitz (12) zusammenwirkt und ein Strömen des Spülmediums (15) in der Ansaugleitung (8) bis zum Ansaugende (17) verhindert.

15. Verfahren nach Anspruch 14,
**dadurch gekennzeichnet,**
**dass** zum Spülen des Ansaugendes der Ansaugleitung (8) der Ventilsitz (12) so, insbesondere ausschließlich manuell, relativ zu der Ventilklappe (11) verstellt wird, dass Spülmedium an der Ventilklappe (11) vorbei zum Ansaugende (17) strömt.

## Claims

1. A beverage preparation device (1), in particular a coffee machine, having a heating device for generating steam, and having a nozzle device (2) for heating and/or foaming milk (7) by means of steam (4), said nozzle device being connected in a fluid-conducting manner to the heating device, wherein a negative pressure can be generated by the nozzle device (2) during the application of steam, milk (9) being able to be sucked by means of said negative pressure via a suction tube (8) which is connected in a fluid-conducting manner to the nozzle device (2) and to which a flushing medium (15) can be applied via a flushing tube (14), and a valve device having an adjustable valve body being disposed between a suction end (17) of the suction tube (8) and the nozzle device (2), said valve device, in a closed position, preventing the flushing medium (15) from flowing out of the flushing tube (14) towards the suction end (17) of the suction tube (8),
**characterized in that**
the valve device is formed as a pressure-dependent automatically switching check valve (10) having a valve body which interacts in an automatically sealing manner with a valve seat (12) when a flushing medium (15) is applied to the suction tube (8) via the flushing tube (14) in order to close the check valve (10), the valve body being formed as a valve flap (11) being pivotable relative to the valve seat (12).

2. The beverage preparation device according to claim 1,
**characterized by**
logic means being formed to automatically, in particular in a defined or an adjustable time interval and/or after a determined or an adjustable beverage supplying interval, initiate a rinsing process in which a flushing medium (15) is transported into the suction tube (8) via the flushing tube (14) and the check valve (10) closes automatically.

3. The beverage preparation device according to claim 1 or 2,
**characterized in that**
the valve flap (11) is pivotably fixed to a stationary component of the beverage preparation device (1), in particular to a check valve housing (13).

4. The beverage preparation device according to any one of the preceding claims,
**characterized in that**
the valve flap (11) being preferably formed as an, in particular platelet-shaped, elastomer part is formed so as to be elastically deformable and by bending is situated between an open position and a closed position.

5. The beverage preparation device according to any one of the preceding claims,
**characterized in that**
the valve flap (11) is preferably connected integrally to a preferably annular clamping section (21) with which the valve flap (11) is preferably fixed in a clamping manner between two stationary components of the beverage preparation device (1), in particular two check valve housings (13).

6. The beverage preparation device according to any one of the preceding claims,
**characterized in that**
the check valve (10) has two preferably detachably connected, in particular interlocked, housing parts (19, 20) defining a valve chamber (22) having a valve flap (11) disposed therein which is fixed in a sealing, in particular detachable, manner to a module reception (24) of the beverage preparation device (1).

7. The beverage preparation device according to any one of the preceding claims,
**characterized in that**
the flushing tube (14) opens in a section between the check valve (10) and the nozzle device (2) into the suction tube (8), preferably spaced apart from the check valve (10).

8. The beverage preparation device according to any one of the preceding claims,
**characterized in that**
hot water and/or cold water and/or steam (4) can be supplied as a flushing medium (15) to the suction tube via the flushing tube (14).

9. The beverage preparation device according to any one of the preceding claims,
**characterized in that**
the flushing tube (14) is connected to valve means of the beverage preparation device (1) and **in that** a flushing medium (15), in particular hot water, cold water or steam (4), can be transported to the suction tube (8) via the flushing tube (14) in a first valve position of said valve means and **in that** the flushing tube (14) has the function of an air tube in a second valve position, air being able to be supplied to the suction tube (8) via said air tube in a milk foam operating state of the beverage preparation device (1), preferably by suction by means of the nozzle device (2).

10. The beverage preparation device according to any one of the claims 1 to 8,
**characterized in that**,
in addition to the flushing tube (14), an air tube opens into the suction tube (8), air being able be supplied to the suction tube (8) via said air tube in a milk foam operating state of the beverage preparation device (1), preferably by suction by means of the nozzle device (2).

11. The beverage preparation device according to any one of the preceding claims,
**characterized in that**,
the suction tube (8) is formed at least in sections in a section between the check valve (10) and the suction end (17) of a flexible tube (16) being in particular detachably fixed to the beverage preparation device (1).

12. The beverage preparation device according to any one of the preceding claims,
**characterized in that**,
the valve seat (12), with which the valve flap (11) interacts in an automatically sealing manner in the closed position, is manually and/or via a preferably electromotive drive adjustable between a functional position, in which the valve flap (11) interacts in a sealing manner with the valve seat (12) in its closed position, and a parking position, which, preferably in the opposite direction of a suction direction of milk through the suction tube (8), is spaced apart from the functional position, in which park position the valve flap (11) cannot interact in a sealing manner with the valve seat (12) during pressurization with the flushing medium (15) in the opposite direction of a suction direction of the milk in order to allow a backflushing of the suction tube (8) up to the suction end (17).

13. The beverage preparation device according to claim 12,
**characterized in that**
the valve seat (12) is, in particular around its longitudinal axis, rotatably disposed and **in that** sliding means (27) are assigned to the valve seat (12) for converting its rotational movement into an, in particular translational, adjusting movement relative to the valve flap (11) for adjusting the valve seat (12) between the functional position and the parking position.

14. A method for operating a beverage preparation device, in particular a coffee machine, according to any one of the preceding claims,
**characterized in that**,
a flushing medium (15), in particular hot water and/or cold water and/or steam (4), are/is transported, in particular in an automatically initiated manner, via the flushing tube (14) into the suction tube (8) and, thus, the valve flap (11) of the check valve (10) is pressurized in a closing direction so that said valve flap (11) interacts in an automatically sealing manner with the valve seat (12) and so that it is prevented that the flushing medium (15) flows in the suction tube (8) up to the suction end (17).

15. The method according to claim 14,
**characterized in that**,
the valve seat (12) is adjusted, in particular exclusively manually, relative to the valve flap (11) in such a manner that, in order to flush the suction end of the suction tube (8), the flushing medium flows past the valve flap (11) to the suction end (17).

## Revendications

1. Dispositif de préparation de boissons (1), notamment une cafetière, ayant un dispositif de chauffage pour générer de la vapeur, et ayant un dispositif à buse (2) qui est connecté en communication fluidique avec le dispositif de chauffage pour chauffer et/ou faire mousser du lait (7) au moyen de vapeur (4), une pression négative pouvant être générée par le dispositif à buse (2) pendant l'application de vapeur, du lait (9) pouvant être aspiré au moyen de ladite pression négative via un tuyau d'aspiration (8) qui est connecté en communication fluidique avec le dispositif à buse (2) et qui peut être alimenté en agent de rinçage (15) via un tuyau de rinçage (14), et un dispositif de soupape ayant un corps de soupape ajustable étant disposé entre une extrémité d'aspiration (17) du tuyau d'aspiration (8) et le dispositif à buse (2), ledit dispositif de soupape empêchant dans une position fermée que de l'agent de rinçage (15) s'écoule à partir du tuyau de rinçage (14) jusqu'à l'extrémité d'aspiration (17) du tuyau d'aspiration (8), **caractérisé en ce que**
le dispositif de soupape est formé comme un clapet anti-retour (10) à commutation automatique en fonction de la pression ayant un corps de soupape qui coopère automatiquement de façon étanche avec un siège de soupape (12) pour fermer le clapet anti-retour (10) lorsque le tuyau d'aspiration (8) est alimenté en agent de rinçage (15) via le tuyau de rinçage (14),
le corps de soupape étant formé comme un clapet de soupape (11) qui peut être pivoté par rapport au siège de soupape (12).

2. Dispositif de préparation de boissons selon la revendication 1, **caractérisé par**
des moyens logiques qui sont formés pour automatiquement, notamment dans un intervalle de temps déterminé ou ajustable et/ou un intervalle de fourniture de boissons déterminé ou ajustable, initier un processus de rinçage dans lequel de l'agent de rinçage (15) est convoyé via le tuyau de rinçage (14) dans le tuyau d'aspiration (8) et le clapet anti-retour (10) ferme automatiquement.

3. Dispositif de préparation de boissons selon la revendication 1 ou 2, **caractérisé en ce que**
le clapet de soupape (11) est fixé de façon pivotante à un composant fixe du dispositif de préparation de boissons (1), notamment à un boîtier de clapet anti-retour (13).

4. Dispositif de préparation de boissons selon l'une quelconque des revendications précédentes,
**caractérisé en ce que**
le clapet de soupape (11) de préférence formé comme une pièce en élastomère, notamment en forme de plaquette, est formé élastiquement déformable et par flexion se situe entre une position ouverte et une position fermée.

5. Dispositif de préparation de boissons selon l'une quelconque des revendications précédentes,
**caractérisé en ce que**
le clapet de soupape (11) est de préférence connecté d'un seul tenant avec une section de serrage (21), de préférence annulaire, à laquelle le clapet de soupape (11) est fixé, de préférence par serrage, entre deux éléments fixes du dispositif de préparation de boissons (1), notamment deux boîtiers de clapet anti-retour (13).

6. Dispositif de préparation de boissons selon l'une quelconque des revendications précédentes,
**caractérisé en ce que**
le clapet anti-retour (10) a deux parties de boîtier (19, 20), de préférence connectées de façon amovible, notamment enclenchées, qui délimitent une chambre de soupape (22) avec un clapet de soupape (11) disposé à l'intérieur, le clapet anti-retour (10) étant fixé de façon étanche, notamment de façon amovible, à un logement de module (24) du dispositif de préparation de boissons (1).

7. Dispositif de préparation de boissons selon l'une quelconque des revendications précédentes,
**caractérisé en ce que**
le tuyau de rinçage (14) débouche en une section entre le clapet anti-retour (10) et le dispositif à buse (2) dans le tuyau d'aspiration (8), de préférence espacé du clapet anti-retour (10).

8. Dispositif de préparation de boissons selon l'une quelconque des revendications précédentes,
**caractérisé en ce que**
de l'eau chaude et/ou de l'eau froide et/ou de la vapeur (4) peuvent être fournies au tuyau d'aspiration comme agent de rinçage (15) via le tuyau de rinçage (14).

9. Dispositif de préparation de boissons selon l'une quelconque des revendications précédentes,
**caractérisé en ce que**
le tuyau de rinçage (14) est connecté avec des moyens de soupape du dispositif de préparation de boissons (1) et **en ce que** de l'agent de rinçage (15), notamment de l'eau chaude, de l'eau froide ou de la vapeur (4), peut être convoyé dans le tuyau d'aspiration (8) via le tuyau de rinçage (14) dans une première position de soupape desdites moyens de soupape et **en ce que** le tuyau de rinçage (14), dans une seconde position de soupape, a la fonction d'un tuyau d'air via lequel, dans un état opérationnel de moussage de lait du dispositif de préparation de boissons (1), de l'air peut être fourni au tuyau d'aspiration (8), de préférence par aspiration au moyen du dispositif à buse (2).

10. Dispositif de préparation de boissons selon l'une quelconque des revendications 1 à 8,
**caractérisé en ce que**,
complémentairement au tuyau de rinçage (14), un tuyau d'air débouche dans le tuyau d'aspiration (8), de l'air, dans un état opérationnel de moussage de lait du dispositif de préparation de boissons (1), pouvant être fourni au tuyau d'aspiration (8), via ledit tuyau d'air de préférence par aspiration au moyen du dispositif à buse (2).

11. Dispositif de préparation de boissons selon l'une quelconque des revendications précédentes,
**caractérisé en ce que**
le tuyau d'aspiration (8) est formé au moins par sections dans une section entre un clapet anti-retour (10) et l'extrémité d'aspiration (17) d'un tuyau (16) flexible, notamment fixé de façon amovible au dispositif de préparation de boissons (1).

12. Dispositif de préparation de boissons selon l'une quelconque des revendications précédentes,
**caractérisé en ce que**
le siège de soupape (12), avec lequel le clapet de soupape (11) coopère automatiquement de façon étanche, dans la position fermée, est ajustable manuellement et/ou via un entraînement, de préférence électromoteur, entre une position fonctionnelle, dans laquelle le clapet de soupape (11) coopère, dans sa position fermée, de façon étanche avec le siège de soupape (12), et une position de stationnement, qui, de préférence dans la direction opposée à une direction d'aspiration de lait à travers le tuyau d'aspiration (8) est espacée de la position fonctionnelle, le clapet de soupape (11) ne pouvant pas coopérer de façon étanche avec le siège de soupape (12) pendant la pressurisation avec de l'agent de rinçage (15) dans la direction opposée à une direction d'aspiration du lait pour faciliter un rétrolavage du tuyau d'aspiration (8) jusqu'à l'extrémité d'aspiration (17).

13. Dispositif de préparation de boissons selon la revendication 12, **caractérisé en ce que**
le siège de soupape (12) est disposé de façon rotative, notamment autour de son axe longitudinal, et **en ce que** des moyens de coulisse (27) sont assignés au siège de soupape (12) pour convertir son mouvement de rotation en un mouvement d'ajustement, notamment translationnel, par rapport au clapet de soupape (11) pour ajuster le siège de soupape (12) entre la position fonctionnelle et la position de stationnement.

14. Procédé pour opérer un dispositif de préparation de boissons (1), notamment une cafetière, selon l'une quelconque des revendications précédentes,
**caractérisé en ce que**
de l'agent de rinçage (15), notamment de l'eau chaude et/ou de l'eau froide et/ou de la vapeur, est convoyé, notamment en étant initié automatiquement, via le tuyau de rinçage (14) dans le tuyau d'aspiration (8) et, ainsi, le clapet de soupape (11) du clapet anti-retour (10) est pressurisé dans une direction de fermeture de sorte que ledit clapet de soupape (11) coopère automatiquement de façon étanche avec le siège de soupape (12) et de sorte qu'il est empêché que l'agent de rinçage (15) en passant le tuyau d'aspiration (8) jusqu'à l'extrémité d'aspiration (17).

15. Procédé selon la revendication 14,
**caractérisé en ce que**
le siège de soupape (12) est ajusté, en particulier uniquement de façon manuelle, par rapport au clapet de soupape (11) de manière que, pour rincer l'extrémité d'aspiration du tuyau d'aspiration (8), l'agent de rinçage s'écoule à côté du clapet de soupape (11) jusqu'à l'extrémité d'aspiration (17).
